# EUROPEAN PATENT APPLICATION

(11) **EP 0 563 912 A1**
(43) Date of publication of application: **06.10.1993**
(21) Application number: 93105307.8
(22) Date of filing: 31.03.1993
(51) Int. Cl.: G06F 1/00, H04K 3/00, H02H 9/00

(54) **A protective device for computers and the like**

(30) Priority: 02.04.1992 IT TO920300
(71) Applicant: DATA PROTECTION S.R.L., I-10128 Turin (IT)
(72) Inventor: Gilardi, Giovanni, I-10149 Torino (IT); Scarazini, Severino, I-10135 Torino (IT)
(74) Representative: Lotti, Giorgio

(57) **Abstract**

A protective device for computers and the like, for preventing electromagnetical pick up, recording and unauthorized use of data from computers during normal operation thereof, and for protecting them against high energy transient disturbances taking place on the main A.C. power line.

The device comprises a network filter unit (1) made up by a plurality of sections (19) comprising inductances (21) and capacitances (23), interposed between metal oxide varistors (27), and a masking unit (3), comprising a power supply (31), a white noise generator (33) and a wide band amplifier (35) emitting the amplifed white noise through an antenna circuit (61). The white noise, being completely random and unpredictable, is impossible to be decoded. The masking unit further comprises a self-checking and alarm circuit that works when the device gets turned on, ensuring the operator that the whole system is working correctly, remains active while the masking unit is on, and informs the operator through acoustic and optical signals if damages in the masking unit should occur.

## Description

The present invention relates to a protective device for computers and the like, for preventing electromagnetical pick up, recording and unauthorized use of data from computers during normal operation thereof, and for protecting them against high energy transient disturbances taking place on the main A.C. power line.

It is known that normally operating electronic devices can behave both as sources and receivers of electromagnetic waves. More particularly computers, when considered as receivers can be disturbed or in some case damaged by sudden high energy transients (natural lightnings, voltage switchings, switching noises due to transitions in low and medium voltage substations by the supplying company, radiowaves generated by industrial installments , sporadic disturbances caused by house appliances or motorcars, etc.) that ban take place on the A.C. power line to which they are connected. When considered as sources, computers can radiate information carrying electromagnetic waves that can frustrate data privacy when properly picked up.

Electromagnetic waves generated from computers and their peripheral equipments (video terminals, printers, peripheral disk drivers, tape drivers, etc.) can be either radiated directly through air or guided through power supply cables and hence along the power distribution network, thus turning the latter in a sort of radiating antenna having very large space dimensions and easy to be reached by people aiming to gather unauthorized data.

More precisely, signals within a data processing system can produce undesired emission through the following mechanisms:
A) - Information can be recovered as amplitude or phase modulation of power absorbed from the main current feed.
   This may happen because the power supply must also feed the current for the signal processing circuit and interface circuits that prepare and adapt the same for the different peripheral devices.
   When using a switching power supply, the information signal can be present in form of a modulation of carriers at a rather high frequency.
   Indeed, any change in the current drawn from the switching power supply by the load causes a change in the duty cycle of the device acting as a switch (chopper). The latter has in turn quite short switching times and consequently generates high frequency spectrum components.
   It is evident that such signals generated in the feeder circuit propagate more easily as signals guided through the power network.
B) - The radiated emission that is more easily reduced to the information due to data processing can originate either from sources within the system or actuated by phenomena in the outer environment. Anyhow, they are strictly related to the electronic circuits controlling the generation of the image for a video terminal and the interfacing circuits, circuitry and wirings connected thereto (graphic boards, color boards, etc.). Namely, these circuits besides forming the baseband video signals (more than 5 MHz wide), are a source of spurious signals that contain the video signal in form of amplitude modulation, and therefore the confidential information that is the result of the processing system at the precise moment.
   The drive for these undesired emissions can take place by means of a "beating" with electromagnetic fields present in the environment (circular video channel carriers or AM or FM radio stations carriers), or with electromagnetic fields intentionally generated and transmitted by people interested in picking up the confidential information.

It is an object of the present invention to overcome the above drawbacks, providing a device for protecting users of electronic apparatuses such as computers against external electrical disturbances and at the same time capable of preventing the risk that guided signals coming out of the above electronic apparatuses are picked up through the power distribution network. In addition, the device of this invention has the object of avoiding that signals generated by electronic circuits for forming an image may be irradiated.

For these and further objects and advantages, which will be more apparent hereinafter, the invention provides a device according to claim 1.

A preferred but not-limiting embodiment of the invention is described herinafter with reference to the accompanying drawings, in which:
- Fig. 1: is a schematic perspective view illustrating a computer connected to units forming the subject device;
- Fig. 2: is an external schematic perspective view of the network filter unit;
- Fig. 3: is an external schematic perspective view of the masking unit;
- Fig. 4: is an overall diagram of the filter unit;
- Fig. 5: is an electric diagram showing the inductance and capacitance attenuation filter of said filter unit;
- Fig. 6: is an electric diagram showing the power supply of the masking unit;
- Fig. 7: is an electric diagram of the masking unit, and more particularly of the white noise generator
and
the successive amplifier;
- Fig. 8: is a schematic perspective view of the circuit of a preferred embodiment of the antenna;
- Fig. 9: is an electric diagram showing the self-checking and alarm circuit;
- Fig. 10: is a block diagram showing the various parts that make up the masking unit;
- Figs. 11a-11d: are diagrams representing hypothetical high energy transients.

As it is evident from the drawings, the subject device is substantially made up by two units: a network or line filter unit 1 and a masking unit 3.

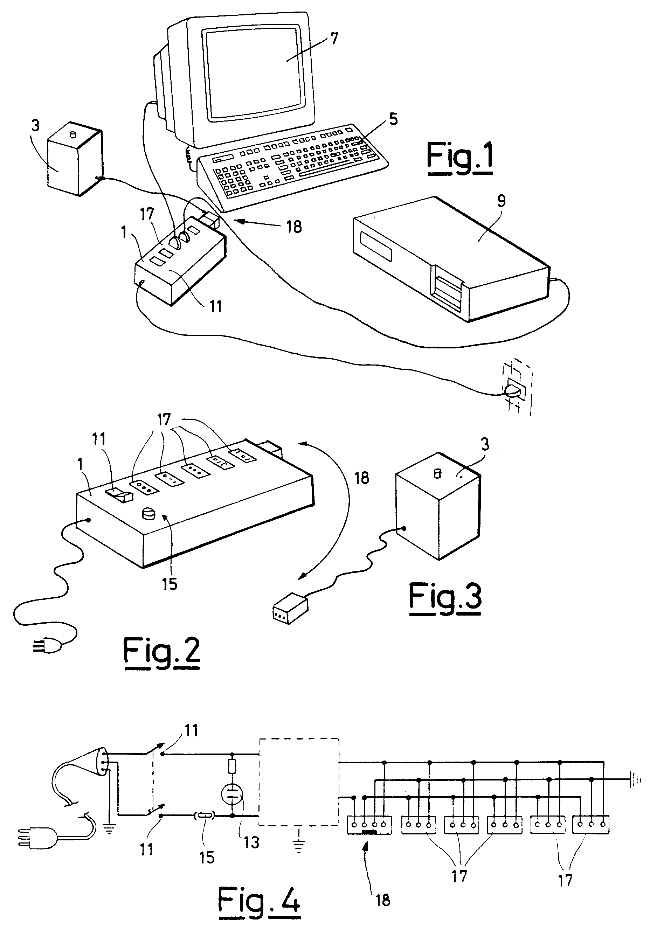

Said units 1 and 3 are shown in figure 1 as applied to a conventional personal computer also shown in the drawing and comprising a keyboard 5, a video display 7, and a computer 9.

It has been deemed useful to represent said units 1 and 3 as connected to a computer in order to put in evidence their volume and roughly show their physical size.

In Figs. 2 and 3 said filter and masking units 1 and 3 are represented as separate units for better clearness. The network filter unit 1 is provided to protect all electronic devices connected thereto from possible transients and surges in the power distribution network, and at the same time drastically attenuating guided signals that might come out of the electronic devices themselves.

Fig. 4 is a circuit diagram showing the allocation of a filter unit 1. In such diagram the power supply circuit for such filter unit is evident: 11 indicates a switch, 13 an indicator lamp, 15 a fuse, 17 a plurality of user connectors. Numeral 18 indicates a special connector for the masking unit: when it does not engage the masking unit it stops power supply from all the other current-taps.

This device avoids that an unfaithful operator working with the computers that are to be protected may physically disconnect the masking unit after starting the working centre, frustrating the protection of data processed by the computer in that moment.

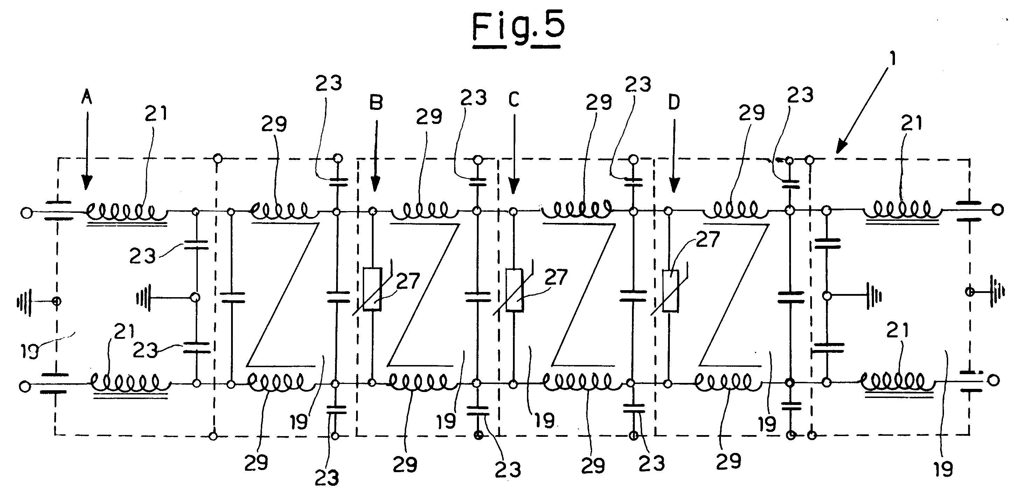

Fig. 5 illustrates the circuit diagram of of filter unit 1. It comprises a plurality of inductors 21 and capacitors 23 (L-C) sections 19 interposed between metal oxide varistors 27.

Some inductors 21 are individually wound on ferrite sticks whereas some other indicated at 29 are wound in pairs about toruses. This construction provides a good attenuation of disturbances, surges, interferences, etc., both of common and differential mode.

The metal oxide varistors 27 are resistors the resistive value of which varies inversely with the voltage applied to their terminals and therefore exhibits a descreasing resistance value to an increasing voltage, thus allowing for the flow of a gradually increasing current.

The purpose of the L-C sections 19 is that of attenuating high frequencies guided towards the power distribution network, by about 100 dB in a bandwidth extending from 1 MHz to 1.5 GHz.

In the illustrated embodiment of the filter unit 1 four sections are provided, as shown by way of example in fig. 5.

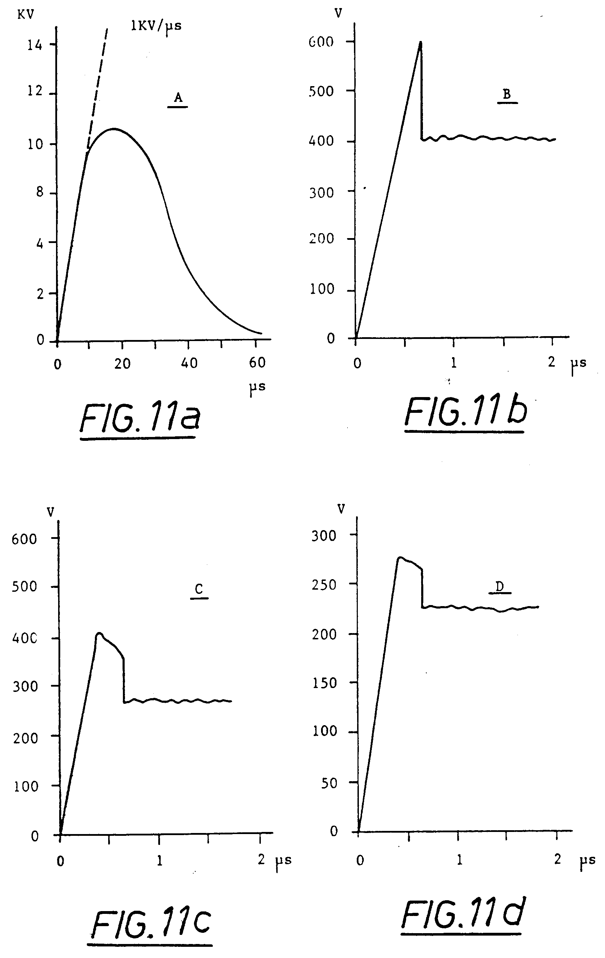

From the graphs of fig. 11 it can be seen how a hypothetical high power transient or surge is "treated" by said filter unit 1 in different steps.

In A a hypothetical voltage surge with a gradient of about 1 kV/microsec. (Fig. 11a) is illustrated; in B said surge is "clipped" at about 600 V (Fig. 11b); in C at about 400 V (Fig. 11c); and in D at about 250 V (Fig. 11d) within a time delay in the order of 1 microsecond.

The voltage level of the surge, now reduced to the indicated value, is no longer dangerous, nor it is able of damaging the user's apparatuses.

It is evident that such filter unit can be designed for different rates, wherein the components are properly sized as a function of A.C. values requested by the user's typology.

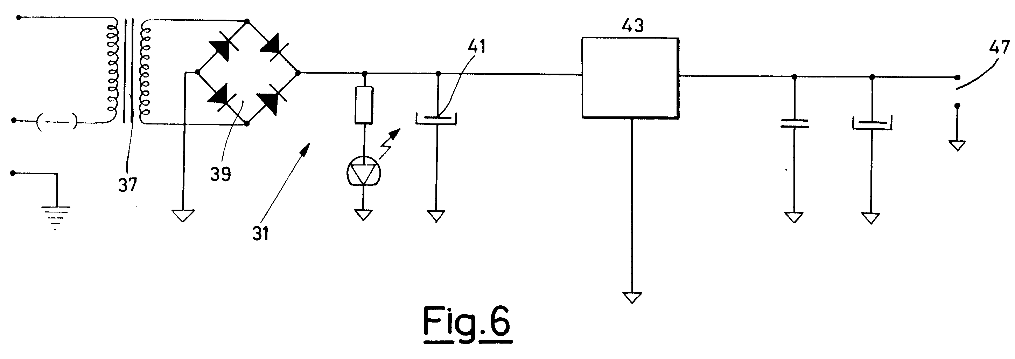

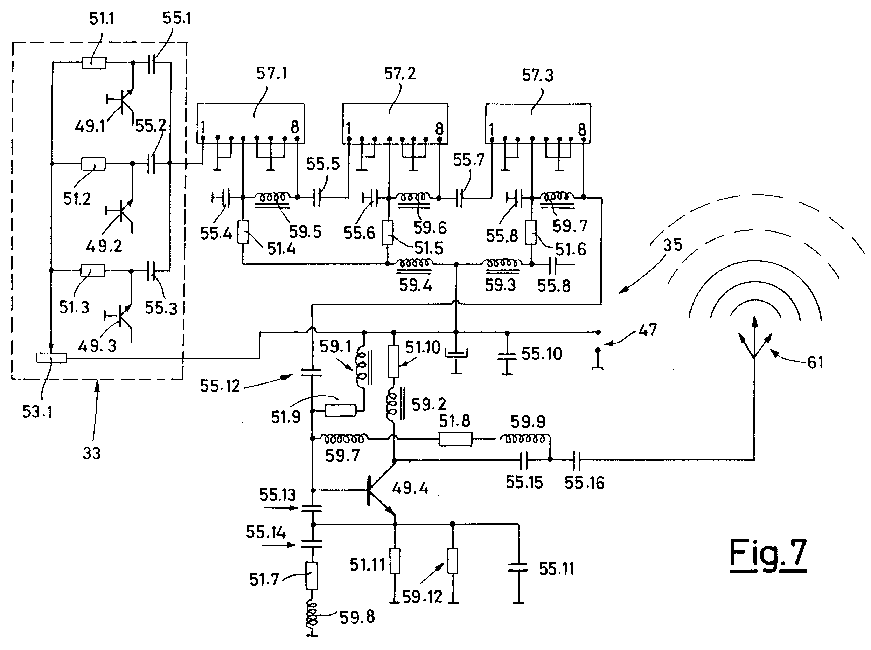

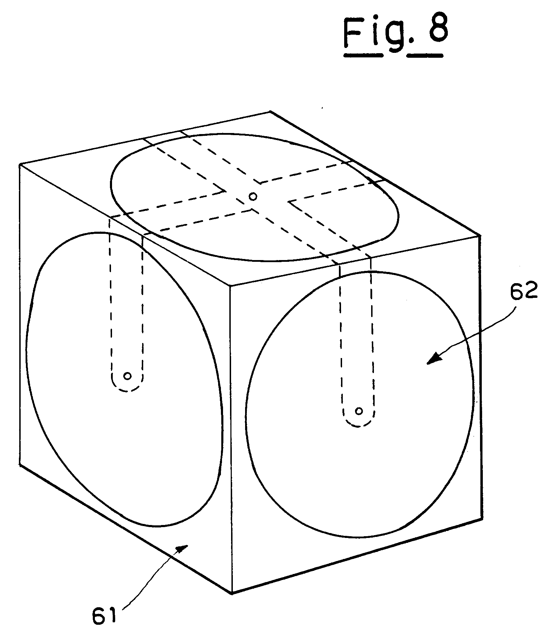

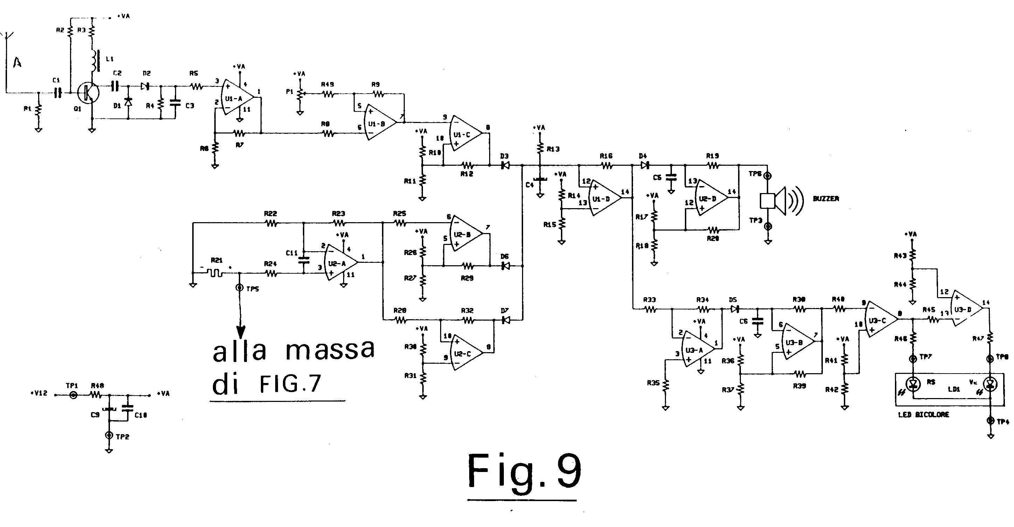

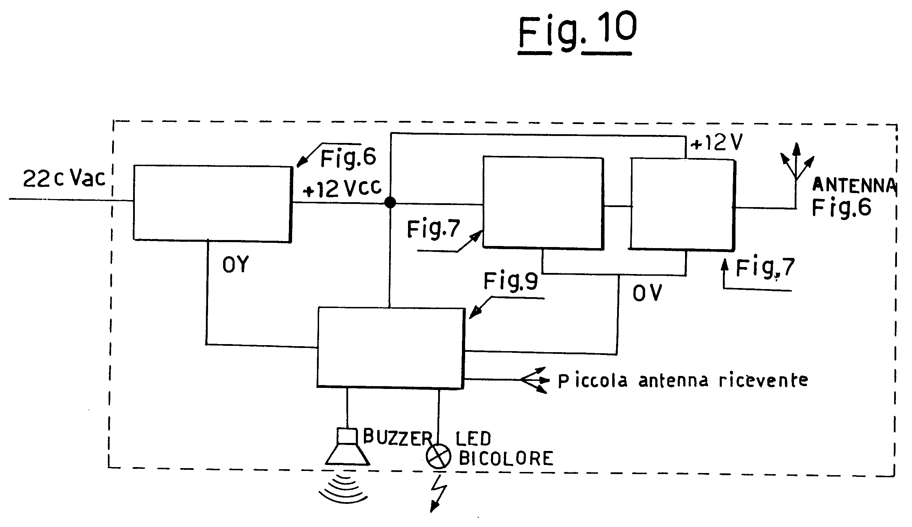

The masking unit 3 substantially comprises four sections:
- a power supply 31 (Fig. 6);
- a white noise generator 33 (Fig. 7);
- a wide band amplifier 35 and antenna circuit (Figs. 7 and 8):
- a self-checking and alarm circuit (Fig. 9).

The power supply 31 (Fig. 6) is a conventional power supply comprising a transformer 37 having a high insulation between the primary and the secondary windings (in the order of 4,000 V as a safety against dangerous discharges) which converts the main voltage (220 V A.C.) in a proper low voltage (about 13 V A.C.), a diode bridge 39 and a capacitor 41 rectifying the A.C. voltage and converting it into a D.C. voltage.

The integrated circuit 43 stabilizes the D.C. voltage at the proper value of 12 V D.C., at output 47, an ideal value for correct operation of the following stations.

The power supply 31 may also be constructed with suitable modifications of the circuit so as to work with a D.C. voltage coming, for example, from a storage battery or cells that can also be external or fitted directly within the inside of the masking unit itself, or from storage batteries of motor vehicles, exchanges, electric power stations, or independent broadcasting systems.

The white noise generator 33 is obtained by means of suitable bias of three transistors 49 (49.1, 49.2, 49.3) through three resistors 51 (51.1, 51.2, 51.3), and a potentiometer 53.1 that regulates the level of energy radiated by the masking unit through the antenna circuit, so as to satisfy the values prescribed by precise rules actually in force (CENELEC Rules).

The dispersion of intrinsic characteristics of the three transistors 49, due to thermal agitation of the electrons of silicon junctions cause the generation of a continuous spectrum ranging from about 10 KHz to about 1.5 GHz which is completely random and unpredictable, and therefore is impossible to be decoded.

The so generated white noise is applied to the successive section 35 through the capacitors 55 (55.1, 55.2, 55.3).

The wideband amplifier and antenna circuit 35 (Figs. 7 and 8) is designed in such a way as to linearly amplify the signal from the preceding stage within the whole considered bandwidth.

The amplifier circuit 35 substantially comprises:
- three hybrid circuits 57 (57.1, 57.2, 57.3) being fed by the power supply through the resistors 51.4, 51.5, 51.6, respectively; the capacitors 55.4, 55.6 and 55.8 being provided for eliminating possible spurious components.
   The radiofrequency output of the hybrid circuits 57 is present at the terminal 8 thereof, the inductors 59.5, 59.6 and 59.7 acting as choke coils to prevent the useful signal from propagating towards the power supply.
   The capacitor 55.5 couples the output of the hybrid circuit 57.1 to the input of the circuit 57.2; the capacitor 55.7 couples the output of 57.2 to the input of 57.3, and finally the capacitor 55.12 couples the output of 57.3 to the rest of the circuit.
- three transistors 49.4, 49.5, 49.6; the transistor 49.4 being properly biased by resistors 51.7, 51.8, 51.10, 51.15, 51.16; the capacitor 55.14 providing a moderate feedback. The oscillating circuits formed by resistors 51.8 and 51.7, inductors 59.7, 59.9, 59.8 and capacitor 55.13 respectively, serving to linearize the radiofrequency output from transistor 49.4 that is present on capacitors 55.15 and 55.16 acting as decoupling capacitors between this stage and the antenna circuit 61.

The inductors 59.1 and 59.2 are chokes to prevent the useful signal from propagating towards the power supply.

An antenna 61 (Fig. 8) is formed by one or more preferably disc-like elements for obtaining a spherical irradiated signal. The elements of the antenna 61 are supported in their geometric position by suitable isolating rests; the elements of the antenna can also consist of printed circuits. The antenna that is so formed is completely contained within the isolating container of of the masking unit and has no output conductor that can be physically, mechanically or electrically connected to the computers to be protected.

The self-checking circuit is substantially composed by:
a) a short linear antenna (A) receiving a small part of the signal that is radiated by the main transmitting antenna;
b) an aperiodic amplifier having a very large bandwidth constituted by a suitably biased transistor (Q1) followed by a germanium diode circuit (D1-D2) forming a signal tracer of the amplifier's output signal and that transform it in a suitable D.C. signal that is applied to the input of an operational amplifier (U1-A) for further amplification. This signal is successively applied to comparator integrated circuit (U1-B) that compares it with a datum voltage that can be regulated by a potentiometer P1. If the signal that is radiated by the transmitting antenna (Fig. 8) decreases, also the signal that is received by the small receiving antenna (A) decreases proportionally and so does the signal applied to the input of comparator circuit (U1-B). If this signal decreases below the datum voltage, the comparator circuit sends a signal to the successive alarm circuit through diode D3.
c) a very low value resistor (R21) that is connected in series with the conductor of the negative pole of the masking unit's power supply. When the current for the power supply of the masking unit passes through, for the known Ohm's law a voltage that is proportional to the passing current occurs at the ends of said resistor (R21).
   This voltage is applied to the differential inputs of an operational amplificator (U2-A) and then, once suitably amplified, to the inputs of two respective voltage comparators U2-B and U2-C. These two comparators make sure that this voltage (and the current supplying the masking unit) is not inferior or superior to two presetted limits. If this should happen, it would be due to a damage in the masking unit; thus, the two comparators send a signal to the successive alarm circuit through diodes D6 and D7.
d) an alarm circuit constituted by the comparator U1-D, which:
   - through the diode D4 activates an acoustic frequency oscillator (about 1 Hz) formed by the operational amplifier U2-D which activares in turn a buzzer, piezoelectric or of other kind, that tells the operator that the protection device is damaged and consequently the computer's data are not protected any more and could be picked up externally;
   - through the operational amplifier U3-A and the diode D5 blocks the low frequency oscillator formed by the operational amplificator U3-B that controls the bicoloured GREEN and RED LED through comparators U3-C and U3-D, respectively. More precisely, during normal operation of the masking unit the buzzer is silent and the bicoloured LED blinks alternately with red and green light. In case of damage of the masking unit the buzzer gives its sound and the red Led stops blinking and shows a constant red light.

When the device is turned on, the capacitor C4 allows the alarm system to work for a period from 5 to 7 seconds so as to check its own correct operation (self-checking).

During the self-checking period the buzzer's sound is continuous and the LED shows a fixed red light for the purpose of checking correct operation thereof. When the self-checking period is over, if the checking operation has a positive result, the buzzer becomes silent and the LED starts blinking alternately with red and green lights. In case of damage, the buzzer goes on buzzing and the LED remains with its fixed red light on.

The self-checking and alarm circuit remains operating while the masking unit is on.

As already indicated, all users must be connected to the filter unit 1 (including the masking unit 3 that must be connected to its special connector), in order to be protected against external electrical disturbances and surges, thus preventing at the same time the risk of guided signals outcoming from the electronic apparatuses being picked up by the power distribution network.

The masking unit 3 must be located as near as possible to the system video terminal 7 to be protected. This way the emission of white noise over an extended spectrum of frequencies by said unit 3 hides also the emission in all the frequencies radiated by the system. In other words, a person attempting to pick up at any distance the signals radiated by the video terminal (or the computer), by means of a TV type antenna (in case properly modified) or by means of any other trick, simultaneously receives on the same wavelength also the white noise signal emitted by the masking unit.

Since the signal is isofrequential and completely random it cannot be descrimined from the signal coming from the data processing system, and the pick up thereof is rendered useless.

For a better understanding and for pointing out further technical features of the device, it is also stated that:
- the device does not only mask the main frequency that is radiated by the computer and its peripheral units (monitors, keyboards, disk drivers, tape drivers, printers, plotters, etc.) but all of their frequencies and harmonics simultaneously as the device gives out a frequency spectrum that is continuous and has constant amplitude from about 10 KHz to 1.5 GHz.
- the device must be simply put near the system that has to be protected. As the device has no outlet that could be physically or mechanically or electrically connected with the computer or its peripheral units, its installation needs no particular instrument or qualified operator.
- as the device simultaneously gives out a spectrum of continuous frequencies with a constant amplitude from 10 KHz to 1.5 GHz, it is able to protect more than one computer with peripheral units, as long as all the systems are comprised within the space range of the device, that can be compared to an ideal sphere having a radius of about 1 meter.

Although the external appearance of the filter unit 1 is substantially a technical one, so that it is not much different from a distribution box with a plurality of outlet connectors, the masking unit 3 that is illustrated having an outer parallelepipedal shape, can take any desired shape. The material for the outer casing may be of any kind as it has no importance concerning the operation of the device.

The filter units can be more than one, cascade connected and power supplied by the preceding unit so as to reach the masking unit 3.

It is evident that the invention is not limited to the described and illustrated embodiment, but several modifications and additional improvements can be carried out within the scope of the invention.

## Claims

1. A protective device for computers and the like, for preventing electromagnetical pick up, recording and unauthorized use of data from computers during normal operation thereof, and for protecting them against high energy transient disturbances taking place on the main A.C. power line, characterised in that it is substantially constituted by two units:
a) a network filter unit (1) or "main unit" being made up by a plurality of sections (19) comprising inductances (21) and capacitances (23), interposed between metal oxide varistors (27), said varistors being resistors the resistive value of which varies inversely with the voltage applied to their terminals and therefore exhibit a descreasing resistance value to an increasing voltage, thus allowing for the flow of a gradually increasing current; the sections (19) comprising inductances (21, 29) and capacitances (23) attenuating high frequencies, generated by the circiutry and active and passive electronic components constituting the hardware of the systems to be protected, guided to the power distribution network; said filter units having components suitably dimensioned as a function of the alternating current requested by the various typologies, and having a variable attenuation power as a function of the application, approximately determined between 50 and 120 dB for a bandwidth extending from 10KHz to 1.5 GHz;
b) a masking unit or "ghost unit" (3), constituted by four sections:
b1) a power supply (31);
b2) a white noise generator (33);
b3) a wide band amplifier (35) and antenna circuit;
b4) a self-checking and alarm circuit;
b1.1) the power supply (31)being composed by a transformer (37) having a high insulation between the primary and the secondary windings which converts the main voltage (220 V A.C.) in a proper low voltage (about 13 V A.C.), a diode bridge (39) and a capacitor (41) rectifying the A.C. voltage and converting it into a D.C. voltage; an integrated circuit (43) stabilizing the D.C. voltage at the proper value;
b2.1) the white noise generator (33) being obtained by means of suitable bias of three transistors (49.1, 49.2, 49.3) through three resistors (51.1, 51.2, 51.3), and a potentiometer (53.1) that regulates the level of energy radiated by the masking unit through the antenna circuit; the dispersion of intrinsic characteristics of the three transistors (49.1, 49.2, 49.3), due to thermal agitation of the electrons of silicon junctions generating a continuous spectrum ranging from about 10 KHz to about 1.5 GHz with a completely random and unpredictable arrangement, impossible to be decoded; said white noise being applied to the successive section (35) through three capacitors (55.1, 55.2, 55.3);
b3.1) the wideband amplifier and antenna circuit (35) being designed in such a way as to linearly amplify the signal from the preceding stage within the whole considered bandwidth and substantially comprising:
b3.2) three hybrid circuits 57 (57.1, 57.2, 57.3) being fed by the power supply through three resistors (51.4, 51.5, 51.6), respectively; suitable capacitors (55.4, 55.6, 55.8) being provided for eliminating possible spurious components; the radiofrequency output of the hybrid circuits (57.1, 57.2, 57.3) being present at the terminal 8 thereof, suitable inductors (59.5, 59.6, 59.7) acting as choke coils to prevent the useful signal from propagating towards the power supply (31); other capacitors (55.5, 55.7) respectively coupling the outputs of the first (57.1) and second (57.2) hybrid circuits to the inputs of the second (57.2) and third (57.3) hybrid circuits, while another capacitor 55.12 couples the output of the third hybrid circuit (57.3) to the rest of the circuit;
b3.3) at least one transistor 49.4 being properly biased by resistors (51.9, 51.10, 51.11, 51.12); the capacitors (55.14, 55.11) providing a moderate feedback; the radiofrequency output of said transistor (49.4) being linearized by oscillating circuits (51.8 and 51.7, 59.7 and 59.9, 59.8, 55.13) being present on capacitors (55.15 and 55.16) acting as decoupling capacitors between this stage and the antenna circuit (61); chokes (59.1, 59.2) being provided to prevent the useful signal from propagating towards the power supply;
b3.4) an antenna (61) formed by at least one element suitably mounted within the isolating container of of the masking unit for obtaining a spherical irradiated signal; the elements of the antenna (61) being supported in their geometric position by suitable isolating rests;
b4.1) an alarm and self-checking circuit substantially composed by:
b4.2) a short linear antenna (A) receiving a small part of the signal that is radiated by the main transmitting antenna;
b4.3) an aperiodic amplifier having a very large bandwidth constituted by a suitably biased transistor (Q1) followed by a germanium diode circuit (D1-D2) forming a signal tracer of the amplifier's output signal and that transform it in a suitable D.C. signal that is applied to the input of an operational amplifier (U1-A) for further amplification: this signal being successively applied to comparator integrated circuit (U1-B) that compares it with a datum voltage that can be regulated by a potentiometer (P1); if the signal that is radiated by the transmitting antenna (Fig. 8) decreases, also the signal that is received by the small receiving antenna (A) decreases proportionally and so does the signal applied to the input of comparator circuit (U1-B); if this signal decreases below the datum voltage, the comparator circuit sends a signal to the successive alarm circuit through a diode (D3);.
b4.4) a very low value resistor (R21) being series connected to the conductor of the negative pole of the masking unit's power supply; when the current for the power supply of the masking unit passes through, for the known Ohm's law a voltage that is proportional to the passing current occurs at the ends of said resistor (R21); this voltage being applied to the differential inputs of an operational amplificator (U2-A) and then, once suitably amplified, to the inputs of two respective voltage comparators (U2-B, U2-C); these two comparators making sure that this voltage (and the current supplying the masking unit) is not inferior or superior to two presetted limits; said two comparators sending a signal to the successive alarm circuit through diodes (D6) and (D7);
b4.5) an alarm circuit constituted by the comparator (U1-D), which:
- through a diode (D4) activates an acoustic frequency oscillator (about 1 Hz) formed by an operational amplifier (U2-D) which activates in turn a buzzer, piezoelectric or of other kind, that tells the operator that the protection device is damaged and consequently the computer's data are not protected any more and could be picked up externally; and through a further operational amplifier (U3-A) and a diode (D5) blocks the low frequency oscillator formed by the operational amplificator (U3-B) that controls a bicoloured Green and Red LED through respective comparators (U3-C) and (U3-D).

2. A protective device according to claim 1, characterised in that the filter unit (1) is connected to the masking unit (3) for protecting computers and the like from external transients and from data signals being picked up data through the network.

3. A protective devicw according to claims 1 and 2, characterised in that the masking unit (3) is connected to the filter unit (1) for protecting computers and the like against the escape of data both through the air and the network, with the aid of the filter unit (1).

4. A protective device according to claims 1 to 3, characterised in that the masking unit (3) is provided with an antenna, formed by a plurality of suitable elements mounted singularly or perpendicularly between themselves, which is completely contained within the isolating container of the masking unit and has no output conductor that can be physically, mechanically or electrically connected to the computers to be protected.

5. A protective device according to claims 1 to 4, characterised in that it does not only mask the main frequency being radiated by the computers and their peripheral units (monitors, keyboards, disk drivers, tape drivers, printers, plotters, etc.), but all of their frequencies and harmonics simultaneously as the device gives out a frequency spectrum that is continuous, has constant amplitude from about 10 KHz to 1.5 GHz, and the intensity therof is higher than that of the emissions radiated by the computers and their peripheral units.

6. A protection device according to claims 1 to 5, characterised in that it is physically and mechanically detached from the computers; the device simultaneously giving out a spectrum of continuous frequencies with a constant amplitude from 10 KHz to 1.5 GHz able to protect more than one computer with peripheral units, as long as all the systems are comprised within the space range of the device, that can be compared to an ideal sphere having a radius of about 1 meter.

7. A protection device according to claims 1 to 6, characterised in that it must be simply put near the system that has to be protected; the device having no outlet that could be physically or mechanically or electrically connected with the computer or its peripheral units, its installation needing no particular instrument or qualified operator.

8. A protective device according to claims 1 to 7, characterised in that the masking unit is power supplied by the filter unit with A.C. voltage through a special connector (18); when said connector (18) does not engage the masking unit it stops power supply from all the other current-taps, stopping the computer and the peripheral units connected thereto from working.

9. A protective device according to claim 1, characterised in that the elements of the antenna (61) are composed by printed circuits.

10. A protective device according to claims 1 to 9, characterised in that the masking unit (3) works independently, being disconnected from the network filter unit (1) and power supplied directly by the main power line.

11. A protection device according to claims 1 to 10, characterised in that the antenna circuit is not contained within the masking unit (3) but acts as a container for the whole masking unit (3) forming the outer casing thereof.

12. A protective device according to clais 1 to 11, characterised in that the masking unit (3) is power supplied with direct current from a storage battery or cells that can also be external or fitted directly within the inside of the masking unit itself, or from storage batteries of motor vehicles, exchanges, electric power stations, or independent broadcasting systems.
